# FASCICULE DE BREVET EUROPEEN

(11) **EP 3 394 396 B1**
(45) Date de publication et mention de la délivrance du brevet: **02.10.2019**
(21) Numéro de dépôt: 16829415.5
(22) Date de dépôt: 21.12.2016
(51) Int. Cl.: F01D 5/14, F01D 5/28

(54) **BOUCLIER DE BORD D'ATTAQUE**
VORDERKANTENUMMANTELUNG
LEADING EDGE SHEATH

(30) Priorité: 21.12.2015 FR 1563006
(43) Date de publication de la demande: 31.10.2018
(73) Titulaire: Safran Aircraft Engines, 75015 Paris (FR)
(72) Inventeur: POUZADOUX, Frédéric, Jean-Bernard, 77550 Moissy-Cramayel Cedex (FR); BASSOT, Alain, Jacques, Michel, 77550 Moissy-Cramayel Cedex (FR); GUIVARC'H, Jérémy, 77550 Moissy-Cramayel Cedex (FR); NOTARIANNI, Gilles, Pierre-Marie, 77550 Moissy-Cramayel Cedex (FR); RUF, Thibault, 77550 Moissy-Cramayel Cedex (FR)
(74) Mandataire: Cabinet Beau de Loménie
(86) Numéro de dépôt international: PCT/FR2016/053605
(87) Numéro de publication internationale: WO 2017/109406

(56) Documents cités:
- EP-A2- 2 378 079
- WO-A1-2014/055499

## Description

### Arrière-plan de l'invention

La présente invention concerne un bouclier de bord d'attaque pour aube de turbomachine. On entend par « turbomachine », dans ce contexte, toute machine dans laquelle peut s'opérer un transfert d'énergie entre un écoulement de fluide et au moins un aubage, comme, par exemple, un compresseur, une pompe, une turbine, une hélice, ou bien une combinaison d'au moins deux de ceux-ci.

De tels boucliers de bord d'attaque sont typiquement destinés à protéger les bords d'attaque d'aubes tournantes ou d'aubes directrices contre les impacts. On entend par « aubes », dans ce contexte, tant les aubes de soufflante que les pales d'hélice aérienne. Afin de limiter leur poids, ces aubes sont typiquement principalement formées d'un corps d'aube en composite à matrice organique, par exemple en polymère, renforcée par des fibres. Bien que ces matériaux présentent des qualités mécaniques généralement très favorables, en particulier par rapport à leur masse, ils présentent une certaine sensibilité aux impacts ponctuels. Des boucliers, typiquement en matériau métallique hautement résistant, comme les alliages de titane, sont donc normalement installés sur les bords d'attaque de telles aubes, afin de les protéger contre ces impacts. Ces boucliers, qui s'étendent d'une extrémité inférieure adjacente au pied d'aube à une extrémité supérieure adjacente à la tête d'aube et présentant une face externe chevauchant le bord d'attaque et une face interne destinée à être fixée contre le corps d'aube, prennent normalement la forme d'une fine ailette intrados et une fine ailette extrados jointes par une section centrale plus épaisse au niveau du bord d'attaque, l'ensemble épousant ainsi la forme de l'aube sur le bord d'attaque et des sections adjacentes de l'intrados et de l'extrados. Comme, à cause de la rotation des aubes, les vitesses d'impact sont normalement croissantes vers la tête d'aube, l'épaisseur entre les faces interne et externe de la section centrale du bouclier suit typiquement une loi d'évolution croissante de l'extrémité inférieure à l'extrémité supérieure du bouclier. Ceci présente toutefois l'inconvénient d'augmenter la masse du bouclier et surtout leur inertie autour d'un axe suivant la direction de la hauteur. Un exemple d'un tel bouclier est divulgué dans la publicacion de demande de brevet européen EP 2 378 079 A2.

### Objet et résumé de l'invention

La présente divulgation vise à remédier à ces inconvénients, en proposer un bouclier de bord d'attaque pour aube de turbomachine qui permette d'offrir une protection appropriée de cette aube avec une masse et une inertie réduites.

Dans au moins un mode de réalisation, ce but est atteint grâce au fait que, dans ledit bouclier de bord d'attaque, qui peut être en matériau métallique, qui s'étend en hauteur d'une extrémité inférieure à une extrémité supérieure, présentant une face externe chevauchant un bord d'attaque et une face interne destinée à être fixée contre un corps d'aube, et qui comporte une ailette intrados, une ailette extrados et une section centrale joignant l'ailette intrados à l'ailette extrados, la section centrale présentant une épaisseur, entre la face externe et la face interne, plus grande qu'une épaisseur correspondante de l'ailette intrados et qu'une épaisseur correspondante de l'ailette extrados entre la face externe et la face interne, et dont l'épaisseur de la section centrale est d'une part croissante, avec un gradient stable ou croissant, sur un premier segment s'étendant sur au moins 60%, voire 80% de la hauteur du bouclier de bord d'attaque à partir de l'extrémité inférieure du bouclier de bord d'attaque, l'épaisseur de la section centrale présentant d'autre part un gradient décroissant au-delà dudit premier segment. L'épaisseur de la section centrale peut même être décroissante sur un deuxième segment du bouclier de bord d'attaque situé au-delà du premier segment.

Grâce à ces dispositions, il est possible de réduire la masse et l'inertie apportées par le bouclier à l'aube quand l'aube est moins exposée aux impacts au-delà dudit premier segment.

La présente divulgation concerne aussi une aube s'étendant en hauteur d'un pied d'aube à une tête d'aube et comprenant un corps d'aube et un tel bouclier de bord d'attaque assemblé sur le corps d'aube, le corps d'aube étant en matériau composite à matrice organique, par exemple polymère, renforcée par des fibres, le bouclier de bord d'attaque étant en un matériau ayant une meilleure résistance aux impacts ponctuels que le matériau composite du corps d'aube, et l'extrémité inférieure du bouclier étant plus proche du pied d'aube que l'extrémité supérieure.

La présente divulgation concerne aussi une turbomachine comprenant une pluralité de telles aubes, une soufflante comprenant une pluralité de telles aubes et un turboréacteur à double flux comprenant une telle soufflante.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 est une vue schématique en perspective d'un turboréacteur à double flux ;
- les figures 2A et 2B sont des vues schématiques en perspective du côté intrados et extrados, respectivement, d'une aube tournante de la soufflante du turboréacteur de la figure 1 selon un mode de réalisation de l'aube ;
- la figure 3 est une vue partielle en coupe de l'aube des figures 2A et 2B selon le plan III-III ; et
- la figure 4 est un graphique illustrant les lois d'évolution de l'épaisseur de la section centrale de boucliers de bord d'attaque suivant deux modes de réalisation, comparées à celle d'un bouclier de bord d'attaque suivant l'état de la technique

### Description détaillée de l'invention

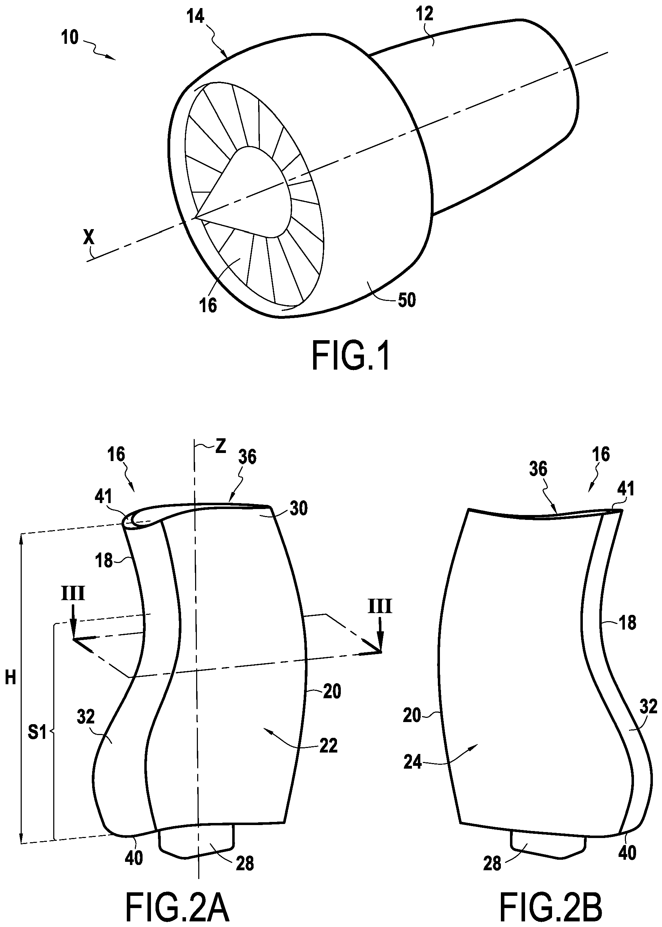

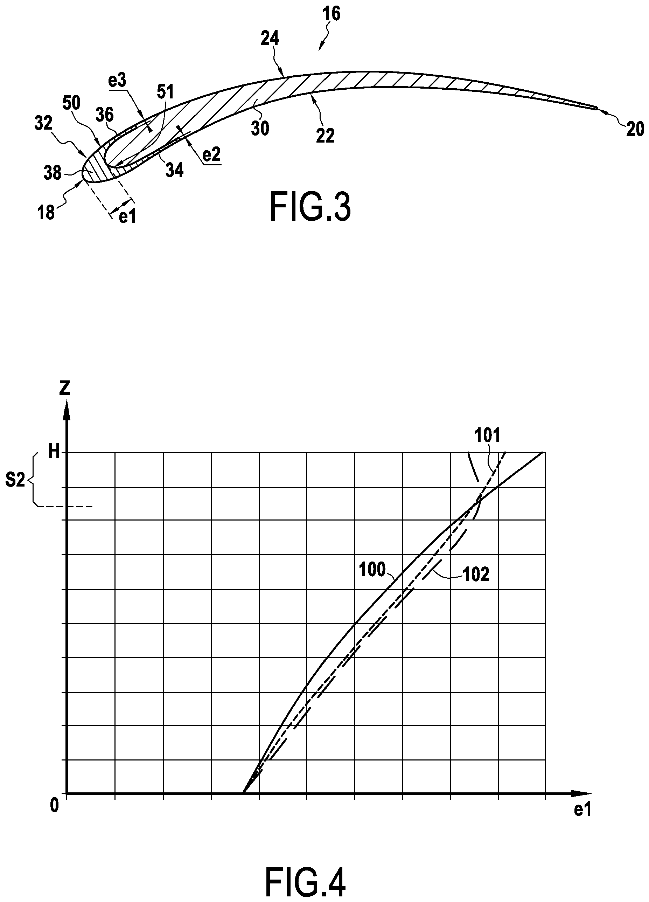

La figure 1 illustre un turboréacteur à double flux 10 comprenant un groupe générateur de gaz 12 et une soufflante 14. Cette soufflante 14 comprend une pluralité d'aubes tournantes 16, arrangées radialement autour d'un axe central X, profilées aérodynamiquement de manière à impulser l'air par leur rotation et entourées par un carter de soufflante 50. Ainsi, comme illustré sur les figures 2A,2B et 3, chaque aube 16 présente un bord d'attaque 18, un bord de fuite 20, un intrados 22, un extrados 24, une tête d'aube 26 et un pied d'aube 28.

En fonctionnement normal, le vent relatif est sensiblement orienté vers le bord d'attaque 18 de chaque aube 16. Ainsi, ce bord d'attaque 18 est particulièrement exposé aux impacts. En particulier quand l'aube 16 comprend un corps d'aube 30 en matériau composite, notamment à matrice polymère renforcée par des fibres, il convient donc de protéger le bord d'attaque 18 avec un bouclier de bord d'attaque 32 intégré à chaque aube. En d'autres termes, le bouclier de bord d'attaque 32 est assemblé sur le corps d'aube 30.

Le bouclier de bord d'attaque 32 est fabriqué en un matériau ayant une meilleure résistante aux impacts ponctuels que le matériau composite du corps d'aube 30. Le bouclier de bord d'attaque 32 est principalement métallique, et plus spécifiquement en alliage à base de titane, comme par exemple le TA6V (Ti-6AI-4V). Le bouclier de bord d'attaque 32 pourrait également être en acier ou en alliage métallique communément désigné par la marque déposée Inconel™. On parle par la suite d'Inconel pour désigner un alliage à base de fer alliés avec du nickel et du chrome.

Le bouclier de bord d'attaque 32 s'étend sur une hauteur H suivant un axe Z d'une extrémité inférieure 40 à une extrémité supérieure 41, présente une face externe 50 chevauchant le bord d'attaque 18 et une face interne 51 destinée à être fixée contre le corps d'aube 30, et comporte une ailette intrados 34, une ailette extrados 36 et une section centrale 38, reliant l'ailette intrados 34 et l'ailette extrados 36 sur la hauteur H du bouclier 32. Les ailettes intrados et extrados 34, 36 assurent le positionnement du bouclier 32 sur le corps d'aube 30. Comme illustré sur la figure 3, montrant une coupe suivant un plan III-III transversal à l'axe Z de la hauteur H du bouclier 32, l'épaisseur e1 de la section centrale 38 entre la face externe 50 et la face interne 51 du bouclier 32 est sensiblement supérieure aux épaisseurs e2,e3 de, respectivement, l'ailette intrados 34 et extrados 36 entre ces faces externe 50 et interne 51, afin de résister aux impacts se concentrant sur cette section centrale 38.

Chaque aube 16 tournant autour de l'axe central X du turboréacteur 1 lors du fonctionnement de celui-ci, la vitesse tangentielle du bord d'attaque 18 augmente donc du pied 26 à la tête d'aube 28. Dans les boucliers connus, afin de prendre en compte l'effet de cette vitesse croissante sur les vitesses d'impact sur l'aube, l'épaisseur e1 de la section centrale du bouclier augmente, de l'extrémité inférieure à l'extrémité supérieure du bouclier, suivant une loi de croissance avec un gradient stable ou même croissant, comme illustré par la courbe 100 sur la figure 4, dans laquelle l'axe vertical correspond à l'axe Z de la hauteur H du bouclier, et l'axe horizontal correspond à l'épaisseur e1.

Toutefois, la tête d'aube 26 est partiellement protégée par le carter 50, dont l'entrée peut être plus étroite que la soufflante 14. Il est envisageable de réduire, par rapport aux boucliers de l'état de la technique, l'épaisseur e1 de la section centrale du bouclier 32 à proximité de la tête d'aube 26 sans effets négatifs sur la sécurité. L'épaisseur e1 de la section centrale 38 du bouclier 32 peut ainsi être croissante avec un gradient de1/dZ stable, c'est-à-dire constant, ou croissant sur un premier segment S1 à partir de l'extrémité inférieure 40 du bouclier 32, mais présenter un gradient décroissant au-delà de ce premier segment S1. Par exemple, dans un premier mode de réalisation illustré sur la figure 4 par la courbe 101, l'épaisseur e1 continue à croître au-delà du premier segment S1 jusqu'à l'extrémité supérieure 41, mais avec un gradient de1/dZ décroissant. Il est même envisageable, comme dans un deuxième mode de réalisation illustré sur la figure 4 par la courbe 102, que ce gradient de1/dZ devienne négatif, et l'épaisseur e1 donc décroissante, sur un deuxième segment S2 situé entre le premier segment S1 et l'extrémité supérieure 41 du bouclier 32. Par rapport à l'exemple comparatif illustré par la courbe 100, il est donc possible de réduire la masse et surtout l'inertie apportée par le bouclier 32 à l'aube 16.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Bouclier de bord d'attaque (32) pour aube (16) de turbomachine, ledit bouclier de bord d'attaque (32) s'étendant en hauteur d'une extrémité inférieure (40) à une extrémité supérieure (41), présentant une face externe (50) chevauchant un bord d'attaque (18) et une face interne (51) destinée à être fixée contre un corps d'aube (30), et comportant une ailette intrados (34), une ailette extrados (36) et une section centrale (38) joignant l'ailette intrados (34) à l'ailette extrados (36), **caractérisé en ce que** la section centrale (38) présente une épaisseur (e1), entre la face externe (50) et la face interne (51), plus grande qu'une épaisseur (e2) correspondante de l'ailettes intrados (34) et qu'une épaisseur (e3) correspondante de l'ailette extrados (36), l'épaisseur (e1) de la section centrale (38) étant d'une part croissante, avec un gradient stable ou croissant, sur un premier segment (S1) s'étendant sur au moins 60% de la hauteur (H) du bouclier de bord d'attaque (32) à partir de l'extrémité inférieure du bouclier de bord d'attaque (32), et présentant d'autre part un gradient décroissant au-delà dudit premier segment (S1).

2. Bouclier de bord d'attaque (32) suivant l'une quelconque des revendications précédentes, dans lequel l'épaisseur (e1) de la section centrale (38) est décroissante sur un deuxième segment (S2) du bouclier de bord d'attaque (32) situé au-delà du premier segment (S1).

3. Bouclier (32) suivant l'une quelconque des revendications précédentes, étant en matériau métallique.

4. Aube (16) s'étendant en hauteur d'un pied d'aube à une tête d'aube et comprenant un corps d'aube (30) et un bouclier de bord d'attaque (32) suivant l'une quelconque des revendications précédentes assemblé sur le corps d'aube (30), le corps d'aube (30) étant en matériau composite à matrice organique renforcée par des fibres, et le bouclier de bord d'attaque (32) étant en un matériau ayant une meilleure résistance aux impacts ponctuels que le matériau composite du corps d'aube (30).

5. Aube (4) suivant la revendication 4, dans laquelle l'extrémité inférieure (40) du bouclier de bord d'attaque (32) est plus proche du pied d'aube que l'extrémité supérieure du bouclier de bord d'attaque (32).

6. Turbomachine comprenant une pluralité d'aubes (16) selon l'une quelconque des revendications 4 ou 5.

7. Soufflante (14) comprenant une pluralité d'aubes (16) selon l'une quelconque des revendications 4 ou 5.

8. Turboréacteur à double flux (10) comprenant une soufflante selon la revendication 7.

## Patentansprüche

1. Vorderkantenschutzschild (32) für eine Schaufel (16) einer Turbomaschine, wobei der Vorderkantenschutzschild (32) sich in der Höhe von einem unteren Ende (40) zu einem oberen Ende (41) erstreckt, eine Außenseite (50), welche eine Vorderkante (18) überlappt, sowie eine Innenseite (51), die dazu bestimmt ist, an einem Schaufelkörper (30) befestigt zu werden, aufweist und einen vorderseitigen Flügel (34), einen rückseitigen Flügel (36) und einen mittleren Abschnitt (38), welcher den vorderseitigen Flügel (34) und den rückseitigen Flügel (36) verbindet, umfasst, **dadurch gekennzeichnet, dass** der mittlere Abschnitt (38) eine Dicke (e1) zwischen der Außenseite (50) und der Innenseite (51) aufweist, die größer als eine entsprechende Dicke (e2) des vorderseitigen Flügels (34) und als eine entsprechende Dicke (e3) des rückseitigen Flügels (36) ist, wobei die Dicke (e1) des mittleren Abschnitts (38) einerseits über ein erstes Segment (S1), das sich ausgehend von dem unteren Ende des Vorderkantenschutzschildes (32) über wenigstens 60 % der Höhe (H) des Vorderkantenschutzschildes (32) erstreckt, mit einem stabilen oder zunehmenden Gradienten zunimmt und andererseits jenseits des ersten Segments (S1) einen abnehmenden Gradienten aufweist.

2. Vorderkantenschutzschild (32) nach dem vorhergehenden Anspruch, bei dem die Dicke (e1) des mittleren Abschnitts (38) über ein zweites Segment (S2) des Vorderkantenschutzschildes (32), das sich jenseits des ersten Segments (S1) befindet, abnehmend ist.

3. Schutzschild (32) nach einem der vorhergehenden Ansprüche, wobei er aus metallischem Material besteht.

4. Schaufel (16), die sich in der Höhe von einem Schaufelfuß zu einem Schaufelkopf erstreckt und einen Schaufelkörper (30) sowie einen Vorderkantenschutzschild (32) nach einem der vorhergehenden Ansprüche umfasst, der an dem Schaufelkörper (30) angebracht ist, wobei der Schaufelkörper (30) aus Verbundwerkstoff mit einer faserverstärkten organischen Matrix besteht und wobei der Vorderkantenschutzschild (32) aus einem Material besteht, das eine bessere Widerstandsfähigkeit gegen punktuelle Einschläge als der Verbundwerkstoff des Schaufelkörpers (30) aufweist.

5. Schaufel (4) nach Anspruch 4, bei der das untere Ende (40) des Vorderkantenschutzschildes (32) näher dem Schaufelfuß liegt als das obere Ende des Vorderkantenschutzschildes (32).

6. Turbomaschine, die eine Vielzahl von Schaufeln (16) nach einem der Ansprüche 4 oder 5 umfasst.

7. Gebläse (14), das eine Vielzahl von Schaufeln (16) nach einem der Ansprüche 4 oder 5 umfasst.

8. Zweistrom-Turbostrahltriebwerk (10), das ein Gebläse nach Anspruch 7 umfasst.

## Claims

1. A leading edge shield (32) for a turbomachine blade (16), said leading edge shield (32) extending heightwise from a bottom end (40) to a top end (41), presenting an outside face (50) overlying a leading edge (18) and an inside face (51) for fastening to a blade body (30), and including a pressure side wing (34), a suction side wing (36), and a central section (38) joining together the pressure side wing (34) and the suction side wing (36), the shield being **characterized in that** the central section (38) presents a thickness (e1) between the outside face (50) and the inside face (51) that is greater both than a corresponding thickness (e2) of the pressure side wing (34) and also than a corresponding thickness (e3) of the suction side wing (36), the thickness (e1) of the central section (38) firstly increasing with a gradient that is stable or increasing over a first segment (S1) extending over at least 60% of the height (H) of the leading-edge shield (32) starting from the bottom end of the leading edge shield (32), and secondly presenting a gradient that decreases beyond said first segment (S1).

2. A leading edge shield (32) according to any preceding claim wherein the thickness (e1) of the central section (38) decreases over a second segment (S2) of the leading-edge shield (32) that is situated beyond the first segment (S1).

3. A shield (32) according to any preceding claim made of metal material.

4. A blade (16) extending heightwise from a blade root to a blade tip and comprising a blade body (30) and a leading edge shield (32) according to any preceding claim assembled on the blade body (30), the blade body (30) being made of organic matrix composite material reinforced by fibers, and the leading-edge shield (32) being made of a material with better point impact resistance than the composite material of the blade body (30) .

5. A blade (4) according to claim 4, wherein the bottom end (40) of the leading-edge shield (32) is closer to the blade root than is the top end of the leading-edge shield (32) .

6. A turbomachine including a plurality of blades (16) according to claim 4 or claim 5.

7. A fan (14) including a plurality of blades (16) according to claim 4 or claim 5.

8. A turbofan (10) including a fan according to claim 7.
